# EUROPÄISCHE PATENTSCHRIFT

(11) **EP 4 192 317 B1**
(45) Veröffentlichungstag und Bekanntmachung des Hinweises auf die Patenterteilung: **18.02.2026**
(21) Anmeldenummer: 21746725.7
(22) Anmeldetag: 20.07.2021
(51) Int. Cl.: A47L 9/28, G01C 21/20, G01S 7/48, G01S 17/00, G01C 3/08, G01S 7/497, G01S 17/48, G01S 17/86, G01S 17/88, G01S 17/931

(54) **VERFAHREN ZUM ERMITTELN EINES ABSTANDS EINES REINIGUNGSROBOTERS ZU EINEM HINDERNIS**
METHOD FOR DETERMINING A DISTANCE BETWEEN A CLEANING ROBOT AND AN OBSTACLE
PROCÉDÉ DE DÉTERMINATION D'UNE DISTANCE ENTRE UN ROBOT DE NETTOYAGE ET UN OBSTACLE

(30) Priorität: 05.08.2020 DE 102020209843
(43) Veröffentlichungstag der Anmeldung: 14.06.2023
(73) Patentinhaber: BSH Hausgeräte GmbH, 81739 München (DE)
(72) Erfinder: DANIEL, Kristina, 97616 Bad Neustadt (DE); SCHMITT, Kai, 97633 Saal (DE); SCHNITZER, Frank, 97616 Bad Neustadt (DE)
(86) Internationale Anmeldenummer: PCT/EP2021/070248
(87) Internationale Veröffentlichungsnummer: WO 2022/028876

(56) Entgegenhaltungen:
- WO-A1-2019/238958
- US-A- 6 124 694
- US-A1- 2018 249 872
- US-B2- 10 422 648

## Beschreibung

Bei Reinigungsrobotern werden seit geraumer Zeit Verfahren zum Ermitteln eines Abstands eines solchen Reinigungsroboters zu einem Hindernis angewandt. Zur Durchführung eines solchen Verfahrens eingerichtete herkömmliche Reinigungsroboter umfassen typischerweise Abstandsmesssysteme, mittels welcher der Abstand des Reinigungsroboters zum Hindernis basierend auf optoelektronischer Distanzmessung - z.B. Lasertriangulation, Laufzeitmessung, Phasendifferenzmessung - dem Einsatz einer Stereokamera oder einer Nutzung von Ultraschallsensoren ermittelbar ist. Alternativ oder zusätzlich werden Reinigungsroboter häufig mit Tastsensoren ausgestattet, die berührend einen Null-Abstand - also ein Berühren - des Reinigungsroboters zu einem Hindernis detektieren.

Derartige Ermittlungsverfahren sind beispielsweise aus den Druckschriften US 10 422 648 B2, WO 2019/238958 A1, US 2018/249872 A1 und US 6 124 694 A bekannt.

Als nachteilig bei besagten üblicherweise eingesetzten berührungslosen Abstandsmesssystemen - z.B. optoelektronischer Distanzmessung, Stereokamera und/oder Ultraschallsensoren - erweisen sich einerseits vergleichsweise hohe Umsetzungskosten und andererseits auslegungsbedingte Unschärfen eines Messbereichs des jeweiligen Abstandsmesssystems. Ein Nachteil berührender Abstandsmesssysteme ist dadurch bedingt, dass solche eine physische Berührung des Reinigungsroboters mit dem Hindernis erfordern, um den Null-Abstand zu detektieren. Dies bedingt negative Auswirkungen wie Abtrieb, Verschleiß und Verschmutzung entweder des Reinigungsroboters oder des Hindernisses oder beider.

Es ist daher eine Aufgabe der vorliegenden Erfindung, für Verfahren zum Ermitteln eines Abstands eines Reinigungsroboters zu einem Hindernis - insbesondere zur Beseitigung der voranstehend aufgezeigten Nachteile - neue Wege aufzuzeigen.

Diese Aufgabe wird durch das Verfahren gemäß dem unabhängigen Patentanspruch 1 gelöst. Bevorzugte Ausführungsformen sind Gegenstand der abhängigen Patentansprüche.

Grundidee der Erfindung ist es, ein Verfahren zum Ermitteln eines Abstands eines Reinigungsroboters zu einem Hindernis zu realisieren, wobei der Reinigungsroboter zwei voneinander verschiedene Abstandsmesssysteme umfasst, von welchen eines in einem Fern-Messbereich und das andere in einem Nah-Messbereich zuverlässige Messergebnisse für den tatsächlichen Abstand des Reinigungsroboters zum Hindernis liefert. Dabei umfasst ein zweites der beiden Abstandsmesssysteme, welches zur Abstandsmessung in dem Nah-Messbereich eingerichtet ist, eine auf das Hindernis gerichtete Kamera. Vorteilhaft kann somit mittels des erfindungsgemäßen Verfahrens ein Abstand des Reinigungsroboters zum Hindernis auch in einem Nah-Messbereich präzise bestimmt werden, wobei eine zum Kartographieren einer von dem Reinigungsroboter zu reinigenden Fläche ohnehin schon am Reinigungsroboter vorgesehene Kamera genutzt werden kann. Dies bedingt Kostenvorteile, da unter Ausnutzung von Synergien auf zusätzliche Sensorik verzichtet werden kann.

Ein erfindungsgemäßes Verfahren zum Ermitteln eines Abstands eines Reinigungsroboters zu einem Hindernis kann vorzugsweise zur Kollisionsvermeidung des Reinigungsroboters mit dem Hindernis eingesetzt werden. Der Reinigungsroboter, welcher zur Durchführung des Verfahrens eingerichtet ist, weist ein zur Abstandsmessung in einem vorbestimmten Fern-Messbereich eingerichtetes erstes Abstandsmesssystem auf. Außerdem weist der Reinigungsroboter ein von dem ersten verschiedenes und zur Abstandsmessung in einem vorbestimmten Nah-Messbereich eingerichtetes zweites Abstandsmesssystem auf. Dieses zweite Abstandsmesssystem des Reinigungsroboters umfasst eine auf das Hindernis gerichtete Kamera. Dabei ist Nah-Messbereich ein Abstandsbereich in der Nähe und der Fern-Messbereich ein zum Reinigungsroboter distanzierter Abstandsbereich. Der Nah-Messbereich kann sich also unmittelbar vom Reinigungsroboter weg erstrecken, wohingegen zwischen einem dem Reinigungsroboter zugewandten Ende des Fernmessbereichs und dem Reinigungsroboter ein Abstand vorhanden ist. Der Fern-Messbereich und der Nah-Messbereich können also schalensegmentartig gestaffelt angeordnet sein. Der Nah- und der Fern-Messbereich überlappen sich in einem Überlappungsbereich. In diesem Überlappungsbereich ist der Abstand des Reinigungsroboters zum Hindernis sowohl mittels des ersten als auch mittels des zweiten Abstandsmesssystems zuverlässig messbar. Dabei umfasst das Verfahren drei Maßnahmen a), b) und c). Die Maßnahme a) sieht vor, dass der Abstand des Reinigungsroboters zum Hindernis zumindest mittels des ersten Abstandsmesssystems ermittelt wird, falls das Hindernis sich innerhalb des Fern-Messbereichs befindet. Gemäß Maßnahme b) des Verfahrens wird der Abstand des Reinigungsroboters zum Hindernis mittels des ersten und des zweiten Abstandsmesssystems ermittelt, sofern das Hindernis sich in dem Überlappungsbereich befindet. Bei Maßnahme c) des Verfahrens wird - in dem Fall, dass das Hindernis sich in dem Nah-Messbereich befindet - der Abstand des Reinigungsroboters zum Hindernis mittels zumindest des zweiten Abstandsmesssystems ermittelt, wobei in den Maßnahmen b) und c) zum Ermitteln des Abstands des Reinigungsroboters zum Hindernis ein optischer Fluss einer mittels der Kamera des zweiten Abstandsmesssystems erfassten Bildfolge ermittelt und ausgewertet wird, und wobei bei der Ermittlung und Auswertung des optischen Flusses der Bildfolge wenigstens ein markanter Bildpunkt verfolgt wird, welcher sich in der Bildfolge entlang eines Flussvektors mit einer Flussvektorlänge verschiebt.

Vorteilhaft wird somit mittels des Verfahrens erreicht, dass sowohl in dem Fern-Messbereich als auch in dem Nah-Messbereich eine zuverlässige Bestimmung des tatsächlichen Abstands des Reinigungsroboters zum Hindernis möglich ist, wobei hierzu für die Ermittlung des Abstands im Nah-Messbereich eine Kamera eingesetzt wird, die der Reinigungsroboter zum Kartographieren einer von dem Reinigungsroboter zu reinigenden Fläche ohnehin umfassen kann. Dies bedeutet, dass mittels des Verfahrens der Abstand des Reinigungsroboters zum Hindernis auch im Nah-Messbereich ohne wesentliche zusätzliche Kosten ermöglicht wird.

Gemäß einer vorteilhaften Weiterbildung des Verfahrens wird in den Maßnahmen a) und b) mittels des ersten Abstandsmesssystems der Abstand des Reinigungsroboters zum Hindernis im Fern-Messbereich mittels optoelektronischer Distanzmessung ermittelt. Ein speziell auf Lasertriangulation basierendes erstes Abstandsmesssystem liefert im Fern-Messbereich besonders zuverlässige Abstandsmessergebnisse.

Erfindungsgemäß wird in den Maßnahmen b) und c) zum Ermitteln des Abstands des Reinigungsroboters zum Hindernis ein optischer Fluss einer mittels der Kamera des zweiten Abstandsmesssystems erfassten Bildfolge ermittelt und ausgewertet. Dies bietet eine besonders präzise Möglichkeit, den Abstand des Reinigungsroboters zum Hindernis mittels der Kamera zu ermitteln.

Bei einer weiteren vorteilhaften Weiterbildung des Verfahrens ist vorgesehen, dass in Maßnahme c) der optische Fluss zum Ermitteln des Abstands des Reinigungsroboters gegenüber dem Hindernis kontinuierlich ermittelt und ausgewertet wird. Dabei wird vorzugsweise der optische Fluss unter Annahme einer nahezu konstanten Geschwindigkeit des Reinigungsroboters zum Ermitteln des Abstands des Reinigungsroboters gegenüber dem Hindernis kontinuierlich ermittelt und ausgewertet. Dies erlaubt vorteilhaft eine besonders zuverlässige Ermittlung des Abstands des Reinigungsroboters zum Hindernis. Etwaige Abweichungen einer über eine Raddrehzahl von Rädern des Reinigungsroboters ermittelte Geschwindigkeit des Reinigungsroboters infolge von Schlupf wirken sich damit nicht auf die Abstandsmessung im Nahmessbereich aus.

Erfindungsgemäß wird bei der Ermittlung und Auswertung des optischen Flusses der Bildfolge wenigstens ein markanter Bildpunkt verfolgt. Dieser markante Bildpunkt verschiebt sich in der Bildfolge entlang eines Flussvektors mit einer Flussvektorlänge. Dies bietet eine besonders einfach umzusetzende Möglichkeit, den optischen Fluss der Bildfolge zu ermitteln.

Eine weitere bevorzugte Weiterbildung des Verfahrens sieht vor, dass ein hindernisnahes gemeinsames Ende des Nah-Messbereichs und des Überlappungsbereichs mittels eines Kalibrierabstands festgelegt ist. Dabei wird dieser Kalibrierabstand mittels des ersten Abstandsmesssystems in Maßnahme a) ermittelt. Hierdurch wird vorteilhaft erreicht, dass über den gesamten Abstandsmessbereich - also sowohl im Nah- als auch Fern-Messbereich und im Überlappungsbereich - eine genaue Bestimmung des Abstands des Reinigungsroboters zum Hindernis ermöglicht wird.

Gemäß einer weiteren vorteilhaften Weiterbildung des Verfahrens erfolgt - falls der Reinigungsroboter unter Einleitung der Maßnahme b) das hindernisnahe Ende des Nah-Messbereichs und des Überlappungsbereichs in Richtung des Hindernisses übertritt - bei diesem Übertreten eine Kalibrierung der Flussvektorlänge auf den mittels der ersten Abstandsmesseinrichtung in Maßnahme a) ermittelten Kalibrierabstand. Vorteilhaft kann so besonders zuverlässig sichergestellt werden, dass sobald der Reinigungsroboter sich außerhalb des Fern-Messbereichs befindet, mittels des zweiten Abstandsmesssystems im Nah-Messbereich genaue Werte des Abstands des Reinigungsroboters zum Hindernis ermittelt werden können.

Gemäß einer weiteren bevorzugten Weiterbildung des Verfahrens ist in Maßnahme a) das zweite Abstandsmesssystem inaktiv. In Maßnahme c) ist das erste Abstandsmesssystem inaktiv. Bevorzugt sind in Maßnahme b) sowohl das erste als auch das zweite Abstandsmesssystem aktiv. Ein unnötiger Energieverbrauch eines der Abstandsmesssysteme wird also vermieden, wenn sich das Hindernis in einem Abstand zum Reinigungsroboter befindet, der außerhalb des von dem jeweiligen inaktivierten Abstandsmesssystem zuverlässig überwachbaren Messbereich angesiedelt ist.

Bei einer vorteilhaften Weiterbildung des Verfahrens entspricht der Fern-Messbereich einem Intervall von 30 mm bis 200 mm des Abstands zwischen Reinigungsroboter und Hindernis. In diesem Intervall arbeitet das erste Abstandsmesssystem besonders präzise und zuverlässig.

Gemäß einer weiteren vorteilhaften Weiterbildung des Verfahrens entspricht der Nah-Messbereich einem Intervall von 0 mm bis 50 mm des Abstands zwischen Reinigungsroboter und Hindernis. In diesem Intervall ist der Abstand des Reinigungsroboters zum Hindernis mittels des zweiten Abstandsmesssystems besonders zuverlässig und präzise bestimmbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: beispielhaft einen Reinigungsroboter, der zur Durchführung eines erfindungsgemäßen Verfahrens eingerichtet ist,
- Fig. 2a: beispielhaft eine Momentaufnahme während der Durchführung des erfindungsgemäßen Verfahrens,
- Fig. 2b: eine weitere beispielhafte Momentaufnahme während der Durchführung des erfindungsgemäßen Verfahrens,
- Fig. 3a: beispielhaft ein bei der Durchführung des erfindungsgemäßen Verfahrens mittels einer Kamera des Reinigungsroboters aufgenommenes Bild einer Bildfolge,
- Fig. 3b: beispielhaft ein weiteres, bei der Durchführung des erfindungsgemäßen Verfahrens mittels der Kamera des Reinigungsroboters aufgenommenes Bild der Bildfolge,
- Fig. 3c: beispielhaft eine Ermittlung eines optischen Flusses der Bildfolge aus den Bildern der Figuren 3a und 3b bei der Durchführung des erfindungsgemäßen Verfahrens,
- Fig. 4: ein das erfindungsgemäße Verfahren beispielhaft illustrierendes Ablaufschaubild.

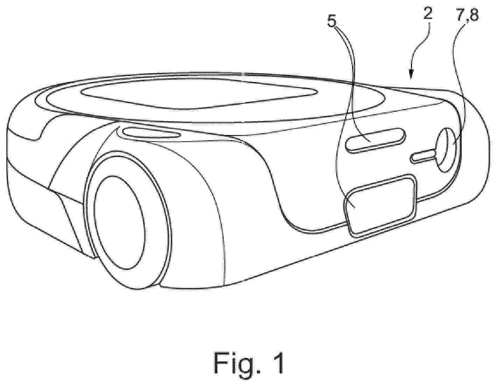

In der Figur 1 ist beispielhaft in einer perspektivischen Darstellung ein Reinigungsroboter 2 gezeigt, der zur Durchführung eines erfindungsgemäßen Verfahrens 1 zum Ermitteln eines Abstands A des Reinigungsroboters 2 zu einem Hindernis 3 eingerichtet ist. Der Reinigungsroboter 2 weist ein erstes Abstandsmesssystem 5 und ein von dem ersten verschiedenes zweites Abstandsmesssystem 7 mit einer Kamera 8 auf. Das erste Abstandsmesssystem 5 basiert zweckmäßig auf Lasertriangulation.

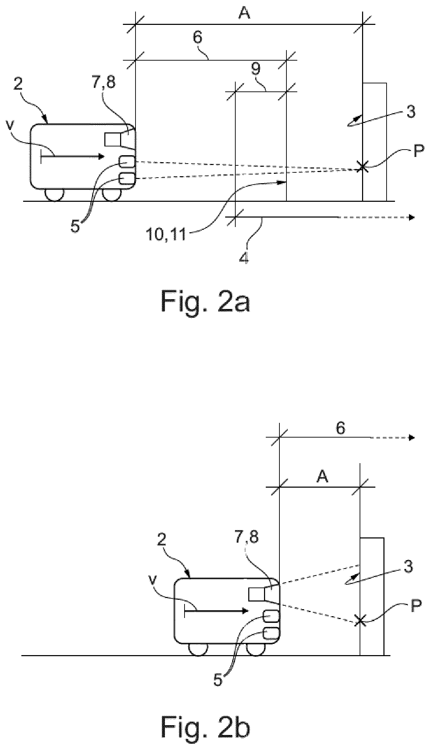

In der Figur 2a ist grobschematisch eine Momentaufnahme des Reinigungsroboters 2 und des Hindernisses 3 bei der Durchführung des erfindungsgemäßen Verfahrens 1 gezeigt. Das erste Abstandsmesssystem 5 des Reinigungsroboters 2 ist zur Abstandsmessung in einem vorbestimmten Fern-Messbereich 4 eingerichtet. Das vom ersten verschiedene zweite Messsystem 7 des Reinigungsroboters 2 ist zur Abstandsmessung in einem vorbestimmten Nah-Messbereich 6 eingerichtet. Dabei ist Nah-Messbereich 6 ein Abstandsbereich in der Nähe und der Fern-Messbereich 4 ein zum Reinigungsroboter 2 distanzierter Abstandsbereich. Der Nah-Messbereich 6 kann sich also unmittelbar vom Reinigungsroboter 2 weg erstrecken, wohingegen zwischen einem dem Reinigungsroboter 2 zugewandten Ende des Fern-Messbereichs 4 und dem Reinigungsroboter 2 ein Abstand vorhanden ist. Der Fern-Messbereich 4 und der Nah-Messbereich 6 können also schalensegmentartig gestaffelt angeordnet sein. Die Kamera 8 des zweiten Abstandsmesssystems 7 ist auf das Hindernis 3 gerichtet. Es ist erkennbar, dass der Nah- und Fern-Messbereich 6, 4 sich in einem Überlappungsbereich 9 überlappen. In diesem Überlappungsbereich 9 ist der Abstand des Reinigungsroboters 2 zum Hindernis 3 sowohl mittels des ersten als auch mittels des zweiten Abstandsmesssystems 5, 7 zuverlässig messbar.

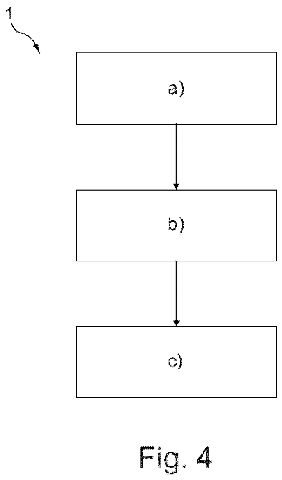

Figur 4 veranschaulicht mittels eines Ablaufschaubilds beispielhaft das erfindungsgemäße Verfahren 1. Es ist erkennbar, dass das Verfahren 1 drei Maßnahmen a), b) und c) umfasst. Gemäß der Maßnahme a) des Verfahrens 1 wird der Abstand A des Reinigungsroboters 2 zum Hindernis 3 mittels wenigstens des ersten Abstandsmesssystems 5 ermittelt, falls das Hindernis 3 sich innerhalb des Fern-Messbereichs 4 befindet. Bei Maßnahme b) wird der Abstand A des Reinigungsroboters 2 zum Hindernis 3 mittels des ersten und des zweiten Abstandsmesssystems 5, 7 ermittelt, falls das Hindernis 3 sich in dem Überlappungsbereich 9 befindet. Gemäß Maßnahme c) des Verfahrens 1 wird der Abstand A des Reinigungsroboters 2 zum Hindernis 3 mittels zumindest des zweiten Abstandsmesssystems 7 des Reinigungsroboters 2 ermittelt, falls das Hindernis 3 sich in dem Nah-Messbereich 6 befindet.

In der in Figur 2a gezeigten Momentaufnahme bei der Durchführung des Verfahrens 1 befindet sich das Hindernis 3 in dem Fern-Messbereich 4 und außerhalb des Überlappungsbereichs 9. Somit wird in Figur 2a der Abstand A des Reinigungsroboters 2 zum Hindernis 3 mittels des ersten Abstandsmesssystems 5 ermittelt, da die Bedingung der Maßnahme a) des Verfahrens 1 erfüllt und die Bedingung der Maßnahmen b) und c) des Verfahrens 1 nicht erfüllt sind. Im gezeigten Beispiel wird der Abstand A des Reinigungsroboters 2 zum Hindernis 3 mittels der ersten Abstandsmessung 5 im Fern-Messbereich 4 mittels Lasertriangulation ermittelt. Sowohl in Maßnahme a) als auch in Maßnahme b) wird also mittels des ersten Abstandsmesssystems 5 der Abstand A des Reinigungsroboters 2 zum Hindernis 3 im Fern-Messbereich 4 mittels Lasertriangulation ermittelt.

Die in der Figur 2b veranschaulichte Momentaufnahme während der Durchführung des Verfahrens 1 lässt erkennen, dass das Hindernis 3 sich nun in dem Nah-Messbereich 6 befindet. Die Bedingung der Maßnahme c) des erfindungsgemäßen Verfahrens 1 ist also in Figur 2b erfüllt. Entsprechend erfolgt im gezeigten Beispiel das Ermitteln des Abstandes A des Reinigungsroboters 2 zum Hindernis 3 mittels des zweiten Abstandsmesssystems 7. In den Maßnahmen b) und c) wird zum Ermitteln des Abstandes A des Reinigungsroboters 2 zum Hindernis 3 ein optischer Fluss einer mittels der Kamera 8 des zweiten Abstandsmesssystems 7 erfassten Bildfolge ermittelt und ausgewertet.

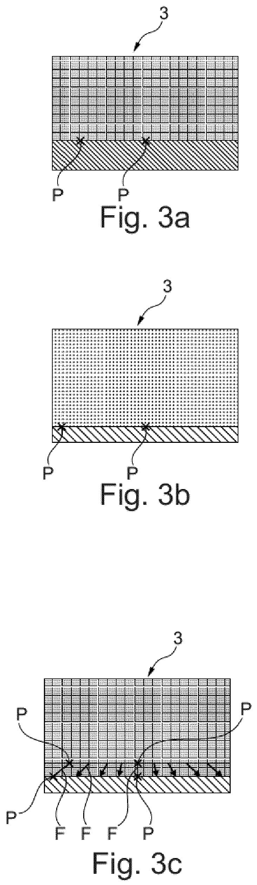

Die Figuren 3a und 3b zeigen jeweils in der Art einer Momentaufnahme Bilder der mittels der Kamera 8 des zweiten Abstandsmesssystems 7 in den Maßnahmen b) und c) erfassten Bildfolge.

Das Ermitteln und Auswerten des optischen Flusses der Bildfolge ist in Figur 3c exemplarisch veranschaulicht. Dabei wird in Maßnahme c) der optische Fluss, beispielsweise unter Annahme einer nahezu konstanten Geschwindigkeit v des Reinigungsroboters 2 zum Ermitteln des Abstands A des Reinigungsroboters 2 gegenüber dem Hindernis 3 kontinuierlich ermittelt und ausgewertet. Figur 3c zeigt also auch lediglich eine Momentaufnahme bei dem Ermitteln bzw. Auswerten der Bildfolge. Hierzu werden die Bilder der Bildfolge von dem Hindernis 3 übereinandergelegt, so dass das in der Figur 3c veranschaulichte Bild erhalten wird. Es ist erkennbar, dass bei der Ermittlung und der Auswertung des optischen Flusses der Bildfolge wenigstens ein markanter Bildpunkt P verfolgt wird. In den Figuren 3a bis 3c sind jeweils zwei solcher markanter Bildpunkte P markiert. Dabei veranschaulicht die Figur 3c, dass sich ein solcher markanter Bildpunkt P in der Bildfolge entlang eines Flussvektors F mit einer Flussvektorlänge verschiebt. Aus dieser Flussvektorlänge kann bei bekannter Geschwindigkeit v des Reinigungsroboters 2 der Abstand A des Reinigungsroboters 2 zum Hindernis 3 ermittelt werden.

In Figur 2a ist außerdem veranschaulicht, dass ein hindernisnahes gemeinsames Ende 10 des Nah-Messbereichs 6 und des Überlappungsbereichs 9 mittels eines Kalibrierabstands 11 festgelegt ist. Dabei wird der Kalibrierabstand 11 mittels des ersten Abstandsmesssystems 5 in Maßnahme a) ermittelt. In einem Fall, in welchem der Reinigungsroboter 2 unter Einleitung der Maßnahme b) das hindernisnahe Ende 10 des Nah-Messbereichs 6 und des Überlappungsbereichs 9 in Richtung des Hindernisses 3 übertritt, erfolgt bei diesem Übertreten eine Kalibrierung der Flussvektorlänge auf den mittels der ersten Abstandsmesseinrichtung 5 in Maßnahme a) ermittelten Kalibrierabstand 11.

Den veranschaulichten Beispielen entsprechend ist in Maßnahme a) das zweite Abstandsmesssystem 7 inaktiv. In Maßnahme c) ist das erste Abstandsmesssystem 5 inaktiv. In Maßnahme b) können sowohl das erste als auch das zweite Abstandsmesssystem 5, 7 aktiv sein. Der Fern-Messbereich 4 entspricht beispielsweise einem Intervall des Abstands A zwischen Reinigungsroboter 2 und Hindernis 3 von 30 mm bis 200 mm. Der Nah-Messbereich 6 entspricht zum Beispiel einem Intervall von 0 mm bis 50 mm des Abstands A zwischen Reinigungsroboter 2 und Hindernis 3.

### Bezugszeichenliste

- 1: Verfahren
- 2: Reinigungsroboter
- 3: Hindernis
- 4: Fern-Messbereich
- 5: Erstes Abstandsmesssystem
- 6: Nah-Messbereich
- 7: Zweites Abstandsmesssystem
- 8: Kamera
- 9: Überlappungsbereich
- 10: Hindernisfernes Ende
- 11: Kalibrierabstand

- A: Abstand
- F: Flussvektor
- P: Bildpunkt
- v: Geschwindigkeit

## Patentansprüche

1. Verfahren (1) zum Ermitteln eines Abstands (A) eines Reinigungsroboters (2) zu einem Hindernis (3), wobei der Reinigungsroboter (2) ein zur Abstandsmessung in einem vorbestimmten Fern-Messbereich (4) eingerichtetes erstes Abstandsmesssystem (5) und ein von dem ersten verschiedenes und zur Abstandsmessung in einem vorbestimmten Nah-Messbereich (6) eingerichtetes zweites Abstandsmesssystem (7) mit einer auf das Hindernis (3) gerichteten Kamera (8) aufweist, wobei der Nah- und der Fern-Messbereich (6, 4) sich in einem Überlappungsbereich (9) überlappen, in welchem sowohl mittels des ersten als auch mittels des zweiten Abstandsmesssystems (5, 7) der Abstand (A) des Reinigungsroboters (2) zum Hindernis (3) zuverlässig messbar ist, wobei das Verfahren (1) folgende Maßnahmen umfasst: a) falls das Hindernis (3) sich innerhalb des Fern-Messbereichs (4) befindet - Ermitteln des Abstands (A) des Reinigungsroboters (2) zum Hindernis (3) mittels wenigstens des ersten Abstandsmesssystems (5); b) falls das Hindernis (3) sich in dem Überlappungsbereich (9) befindet - Ermitteln des Abstands (A) des Reinigungsroboters (2) zum Hindernis (3) mittels des ersten und des zweiten Abstandsmesssystems (5, 7); c) falls das Hindernis (3) sich in dem Nah-Messbereich (6) befindet - Ermitteln des Abstands (A) des Reinigungsroboters (2) zum Hindernis (3) mittels wenigstens des zweiten Abstandsmesssystems (7), wobei in den Maßnahmen b) und c) zum Ermitteln des Abstands (A) des Reinigungsroboters (2) zum Hindernis (3) ein optischer Fluss einer mittels der Kamera (8) des zweiten Abstandsmesssystems (7) erfassten Bildfolge ermittelt und ausgewertet wird, **dadurch gekennzeichnet, dass** bei der Ermittlung und Auswertung des optischen Flusses der Bildfolge wenigstens ein markanter Bildpunkt (P) verfolgt wird, welcher sich in der Bildfolge entlang eines Flussvektors (F) mit einer Flussvektorlänge verschiebt.

2. Verfahren (1) nach Anspruch 1, **dadurch gekennzeichnet, dass** in den Maßnahmen a) und b) mittels des ersten Abstandsmesssystems (5) der Abstand (A) des Reinigungsroboters (2) zum Hindernis (3) im Fern-Messbereich (4) mittels optoelektronischer Distanzmessung ermittelt wird.

3. Verfahren (1) nach Anspruch 1 oder 2, **dadurch gekennzeichnet, dass** in Maßnahme c) der optische Fluss, insbesondere unter Annahme einer nahezu konstanten Geschwindigkeit (v) des Reinigungsroboters (2), zum Ermitteln des Abstands (A) des Reinigungsroboters (2) gegenüber dem Hindernis (3) kontinuierlich ermittelt und ausgewertet wird.

4. Verfahren (1) nach einem der vorherigen Ansprüche, **dadurch gekennzeichnet, dass** ein hindernisnahes gemeinsames Ende (10) des Nah-Messbereichs (6) und des Überlappungsbereichs (9) mittels eines Kalibrierabstands (11) festgelegt ist, wobei der Kalibrierabstand (11) mittels des ersten Abstandsmesssystems (5) in Maßnahme a) ermittelt wird.

5. Verfahren (1) nach einem der vorherigen Ansprüche, **dadurch gekennzeichnet, dass** in einem Fall, in welchem der Reinigungsroboter (2) unter Einleitung der Maßnahme b) das hindernisnahe Ende (10) des Nah-Messbereichs (6) und des Überlappungsbereichs (9) in Richtung des Hindernisses (3) übertritt, bei diesem Übertreten eine Kalibrierung der Flussvektorlänge auf den mittels der ersten Abstandsmesseinrichtung (5) in Maßnahme a) ermittelten Kalibrierabstand (11) erfolgt.

6. Verfahren (1) nach einem der vorhergehenden Ansprüche, **dadurch gekennzeichnet, dass** in Maßnahme a) das zweite Abstandsmesssystem (7) und in Maßnahme c) das erste Abstandsmesssystem (5) inaktiv ist, wobei vorzugsweise in Maßnahme b) sowohl das erste als auch das zweite Abstandsmesssystem (5, 7) aktiv sind.

7. Verfahren (1) nach einem der vorhergehenden Ansprüche, **dadurch gekennzeichnet, dass** der Fern-Messbereich (4) einem Intervall von 30 mm bis 200 mm des Abstands (A) zwischen Reinigungsroboter (2) und Hindernis (3) entspricht.

8. Verfahren (1) nach einem der vorhergehenden Ansprüche, **dadurch gekennzeichnet, dass** der Nah-Messbereich (6) einem Intervall von 0 mm bis 50 mm des Abstands (A) zwischen Reinigungsroboter (2) und Hindernis (3) entspricht.

## Claims

1. Method (1) for determining a distance (A) between a cleaning robot (2) and an obstacle (3), wherein the cleaning robot (2) has a first distance measuring system (5) designed to measure the distance in a predetermined remote measuring range (4) and a second distance measuring system (7) with a camera (8) directed onto the obstacle (3) designed to measure the distance in a predetermined close measuring range (6), wherein the close and the remote measuring range (6, 4) overlap in an overlap region (9), in which the distance (A) between the cleaning robot (2) and the obstacle (3) can be reliably measured by means of the first and also by means of the second distance measuring system (5, 7), wherein the method (1) comprises the following measures: a) if the obstacle (3) is located within the remote measuring range (4) - determining the distance (A) between the cleaning robot (2) and the obstacle (3) by means of at least the first distance measuring system (5); b) if the obstacle (3) is located in the overlap region (9) - determining the distance (A) between the cleaning robot (2) and the obstacle (3) by means of the first and the second distance measuring system (5 ,7); c) if the obstacle (3) is located in the close measuring range (6) - determining the distance (A) between the cleaning robot (2) and the obstacle (3) by means of at least the second distance measuring system (7), wherein in measures b) and c) an optical flow of an image sequence detected by means of the camera (8) of the second distance measuring system (7) is determined and evaluated in order to determine the distance (A) between the cleaning robot (2) and the obstacle (3), **characterised in that** when the optical flow of the image sequence is determined and evaluated, at least one striking pixel (P) is traced, which moves in the image sequence along a flow vector (F) with a flow vector length.

2. Method (1) according to claim 1, **characterised in that** in measures a) and b) the distance (A) between the cleaning robot (2) and the obstacle (3) in the remote measuring range (4) is determined by means of the first distance measuring system (5) using optoelectronic distance measurement.

3. Method (1) according to claim 1 or 2, **characterised in that** in measure c), the optical flow is determined and evaluated continuously in particular by assuming an almost constant velocity (v) of the cleaning robot (2) in order to determine the distance (A) between the cleaning robot (2) and the obstacle (3).

4. Method (1) according to one of the preceding claims, **characterised in that** a shared end (10) of the close measuring range (6) and the overlap region (9) near to the obstacle is defined by means of a calibration distance (11), wherein the calibration distance (11) is determined by means of the first distance measuring system (5) in measure a).

5. Method (1) according to one of the preceding claims, **characterised in that** in one case, in which the cleaning robot (2) passes over the end (10) of the close measuring range (6) near to the obstacle and of the overlap region (9) in the direction of the obstacle (3), by introducing measure b), a calibration of the flow vector length with the calibration distance (11) determined by means of the first distance measuring device (5) in measure a) is carried out.

6. Method (1) according to one of the preceding claims, **characterised in that** in measure a), the second distance measuring system (7) and in measure c) the first distance measuring system (5) is inactive, wherein in measure b) both the first and also the second distance measuring system (5, 7) are preferably active.

7. Method (1) according to one of the preceding claims, **characterised in that** the remote measuring range (4) corresponds to an interval of 30 mm to 200 mm of the distance (A) between the cleaning robot (2) and the obstacle (3).

8. Method (1) according to one of the preceding claims, **characterised in that** the close measuring range (6) corresponds to an interval of 0 mm to 50 mm of the distance (A) between the cleaning robot (2) and the obstacle (3).

## Revendications

1. Procédé (1) de détermination d'une distance (A) entre un robot de nettoyage (2) et un obstacle (3), dans lequel le robot de nettoyage (2) comprend un premier système de mesure de distance (5) configuré pour la mesure de distance dans une plage de mesure distante (4) prédéfinie et un second système de mesure de distance (7) différent du premier, configuré pour mesurer la distance dans une plage de mesure proche (6) prédéfinie, avec une caméra (8) dirigée vers l'obstacle (3), dans lequel la plage de mesure proche et la plage de mesure distante (6, 4) se chevauchent dans une zone de chevauchement (9), dans lequel la distance (A) entre le robot de nettoyage (2) et l'obstacle (3) peut être mesurée de manière fiable à la fois à l'aide du premier et à l'aide du second système de mesure de distance (5, 7), dans lequel le procédé (1) comprend les étapes suivantes : a) si l'obstacle (3) se trouve dans la plage de mesure distante (4), détermination de la distance (A) entre le robot de nettoyage (2) et l'obstacle (3) à l'aide d'au moins le premier système de mesure de distance (5) ; b) si l'obstacle (3) se trouve dans la zone de chevauchement (9), détermination de la distance (A) entre le robot de nettoyage (2) et l'obstacle (3) à l'aide des premier et second systèmes de mesure de distance (5, 7) ; c) si l'obstacle (3) se trouve dans la plage de mesure proche (6), détermination de la distance (A) entre le robot de nettoyage (2) et l'obstacle (3) à l'aide d'au moins le second système de mesure de distance (7), dans lequel, dans les étapes b) et c), pour la détermination de la distance (A) entre le robot de nettoyage (2) et l'obstacle (3), un flux optique d'une séquence d'images saisie à l'aide de la caméra (8) du second système de mesure de distance (7) est déterminé et évalué, **caractérisé en ce que**, lors de la détermination et de l'évaluation du flux optique de la séquence d'images, au moins un point d'image marquant (P) est suivi, lequel se déplace dans la séquence d'images le long d'un vecteur de flux (F) avec une longueur de vecteur de flux.

2. Procédé (1) selon la revendication 1, **caractérisé en ce que**, dans les étapes a) et b), la distance (A) entre le robot de nettoyage (2) et l'obstacle (3) dans la plage de mesure distante (4) est déterminée à l'aide du premier système de mesure de distance (5) à l'aide d'une mesure de distance optoélectronique.

3. Procédé (1) selon la revendication 1 ou la revendication 2, **caractérisé en ce que**, dans l'étape c), le flux optique, en particulier en prenant pour hypothèse une vitesse (v) presque constante du robot de nettoyage (2), est déterminé et évalué en continu pour la détermination de la distance (A) entre le robot de nettoyage (2) et l'obstacle (3).

4. Procédé (1) selon l'une des revendications précédentes, **caractérisé en ce qu'**une extrémité commune (10) proche de l'obstacle de la plage de mesure proche (6) et de la zone de chevauchement (9) est définie à l'aide d'une distance d'étalonnage (11), dans lequel la distance d'étalonnage (11) est déterminée à l'aide du premier système de mesure de distance (5) dans l'étape a).

5. Procédé (1) selon l'une des revendications précédentes, **caractérisé en ce que**, dans le cas où le robot de nettoyage (2), sous l'effet de l'étape b), dépasse l'extrémité proche de l'obstacle (10) de la plage de mesure proche (6) et de la zone de chevauchement (9) en direction de l'obstacle (3), lors de ce dépassement, un étalonnage de la longueur du vecteur de flux est effectué sur la distance d'étalonnage (11) déterminée à l'aide du premier dispositif de mesure de distance (5) dans l'étape a).

6. Procédé (1) selon l'une des revendications précédentes, **caractérisé en ce que**, dans l'étape a), le second système de mesure de distance (7) est inactif et, dans l'étape c), le premier système de mesure de distance (5) est inactif, dans lequel de préférence, dans l'étape b), les premier et second systèmes de mesure de distance (5, 7) sont actifs.

7. Procédé (1) selon l'une des revendications précédentes, **caractérisé en ce que** la plage de mesure distante (4) correspond à un intervalle compris entre 30 mm et 200 mm de la distance (A) entre le robot de nettoyage (2) et l'obstacle (3).

8. Procédé (1) selon l'une des revendications précédentes, **caractérisé en ce que** la plage de mesure proche (6) correspond à un intervalle compris entre 0 mm et 50 mm de la distance (A) entre le robot de nettoyage (2) et l'obstacle (3).
